# EUROPEAN PATENT APPLICATION

(11) **EP 2 034 168 A1**
(43) Date of publication of application: **11.03.2009**
(21) Application number: 07741313.6
(22) Date of filing: 10.04.2007
(51) Int. Cl.: F02M 37/08, F02M 37/00, F02M 37/20

(54) **DIESEL ENGINE FOR DIMETHYL ETHER**

(30) Priority: 27.06.2006 JP 2006176466
(71) Applicant: Isuzu Motors Limited, Tokyo 140-8722 (JP)
(72) Inventor: TAKASE, Shigehisa, Fujisawa-shi, Kanagawa 252-8501 (JP)
(74) Representative: Thoenes, Dieter
(86) International application number: PCT/JP2007/057877
(87) International publication number: WO 2008/001532

(57) **Abstract**

The power consumption of a feed pump drive motor and feed pump drive noise during the idling or under light load are reduced. A diesel engine 1 using dimethyl ether 5 as a fuel includes: a feed pump 8 provided in a fuel tank 6 and supplying the fuel in the fuel tank 6 to a high-pressure pump 4 on the engine side through a feed pipe 7; and a control device 14 that calculates a vapor pressure from a fuel temperature in a fuel passage portion 13 inside the high-pressure pump 4, sets a margin pressure range of the vapor pressure based on an engine operation state, and controls the feed pump 8 so that a pressure of the fuel in the fuel passage portion 13 inside the high pressure pump 4 becomes a target pressure obtained by adding the margin pressure range to the vapor pressure.

## Description

### TECHNICAL FIELD

The present invention relates to a diesel engine for dimethyl ether.

### BACKGROUND

Diesel engines using dimethyl ether (referred to hereinbelow as DME) as an alternative fuel for light oil have been developed in recent years in the field of diesel engines (see, for example, Patent Document 1). DME is synthesized from a natural gas or biogas, and because DME contains no substances that cause pollution by exhaust gases, such as sulfur, nitrogen, or aromatic hydrocarbons, it creates clean exhaust gases even in combustion in engines.

However, because DME is a gas at a normal temperature and under a normal pressure, it has to be pressurized and supplied as a liquid to an engine when it is to be employed in diesel engines. This is because gasification of fuel causes gas bubbles to mix with the fuel, thereby inducing cavitation in pipes and a high-pressure pump and making the revolution of the engine unstable.

On the other hand, where an excessively high pressure is applied to DME, because the viscosity of DME is low, leak of DME occurs in various sliding parts, making it necessary to use a bulky recovery system. Further, power consumption of the feed pump itself increases, thereby degrading fuel efficiency. Accordingly, it is preferred that appropriate pressurization of DME be performed.

In order to resolve such a problem, the invention described in Patent Document 1 provides a diesel engine using dimethyl ether as a fuel, including a feed pump that supplies a fuel from a fuel tank to a high-pressure pump on the engine side, a regulator that regulates the feed pressure of the feed pump, and feed pressure control means for controlling the regulator according to a map created in advance based on a vapor pressure diagram of dimethyl ether. In this case, the map provides a target feed pressure that is higher by a predetermined value than a vapor pressure of the dimethyl ether for each fuel.

Patent Document 1: Japanese Patent Application Laid-open No. 2001-115916.

### DISCLOSURE OF THE INVENTION

### PROBLEMS TO BE SOLVED BY THE INVENTION

However, in a diesel engine, because a range of the target feed pressure (also referred to as a margin pressure range) is fixed (constant), there is a possibility of having a pressure equal to or lower than the vapor pressure during acceleration, and where a pressure control of common rail is difficult to perform in this case due to vapor generated in the pipes, the engine can stall. Where the margin pressure range is further enlarged to prevent this problem, there is no sense in performing the vapor pressure control. In particular, in an idling or light load, the amount of fuel returned from the high-pressure pump to the fuel tank becomes too large and the drive loss of the feed pump also rises. In addition, the load of the feed pump drive motor during idling or light load increases, power consumption becomes too high, and there is a risk that the battery will not be charged completely in a low revolution in which the charging capacity of the generator is low. As a result the replacement life of the battery is shortened (battery endurance is reduced). Further, the feed pump drive sound (noise) is increased and merchantability of the vehicle carrying the engine is reduced.

The present invention has been created to resolve this problem and it is an object thereof to provide a diesel engine for dimethyl ether in which power consumption of a feed pump drive motor and feed pump drive noise during the idling or under light load are reduced.

### MEANS FOR SOLVING THE PROBLEMS

Among the present inventions, the invention set forth in claim 1 provides a diesel engine using dimethyl ether as a fuel, comprising: a feed pump provided in a fuel tank and supplying the fuel in the fuel tank to a high-pressure pump on the engine side through a feed pipe; and a control device that calculates a vapor pressure from a fuel temperature in a fuel passage portion inside the high-pressure pump, sets a margin pressure range of the vapor pressure based on an engine operation state, and controls the feed pump so that a pressure of the fuel in the fuel passage portion inside the high pressure pump becomes a target pressure obtained by adding the margin pressure range to the vapor pressure.

According to the invention set forth in claim 2, a relief valve, which returns the fuel from the fuel passage portion to the fuel tank via a return pipe when a fuel pressure exceeds a predetermined value, is provided in the fuel passage portion inside the high-pressure pump, a return fuel temperature sensor which detects a temperature of the return fuel that is returned to the fuel tank is provided in the return pipe, and the control device is set so that a revolution speed of the feed pump is raised to increase a return amount of the return fuel when the temperature of the return fuel exceeds a predetermined value.

### EFFECT OF THE INVENTION

In accordance with the present invention, the power consumption of a feed pump drive motor and feed pump drive noise during the idling or under light load are reduced.

Further, in accordance with the present invention, the temperature of the fuel passage portion inside the high-pressure pump and the fuel temperature inside the fuel tank can be lowered, a fuel cooler becomes unnecessary, and cost is reduced.

### BRIEF DESCRIPTION OF THE DRAWINGS

FIG. 1 is a structural diagram illustrating schematically a diesel engine for dimethyl ether of an embodiment of the present invention.
FIG. 2 is a block diagram of a control system for controlling a feed pump.
FIG. 3 is a vapor pressure diagram of DME and a margin pressure range.
FIG. 4 is a vapor pressure diagram of DME.

### EXPLANATION OF REFERENCE NUMERALS

- 1: diesel engine
- 4: high-pressure pump
- 5: dimethyl ether
- 6: fuel tank
- 7: feed pipe
- 8: feed pump
- 13: fuel passage portion inside high-pressure pump
- 14: control device
- 30: return pipe
- 31: relief valve
- 32: return fuel temperature sensor

### BEST MODE FOR CARRYING OUT THE INVENTION

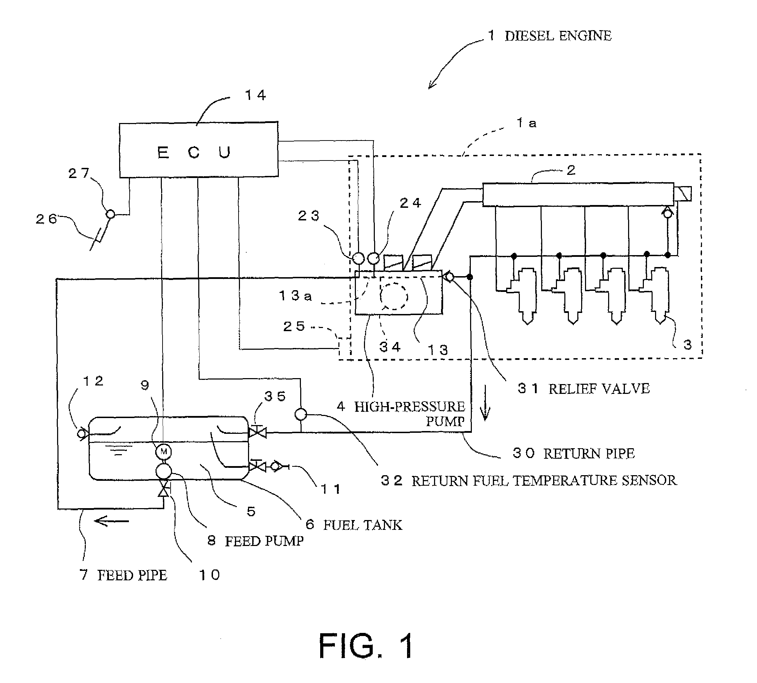

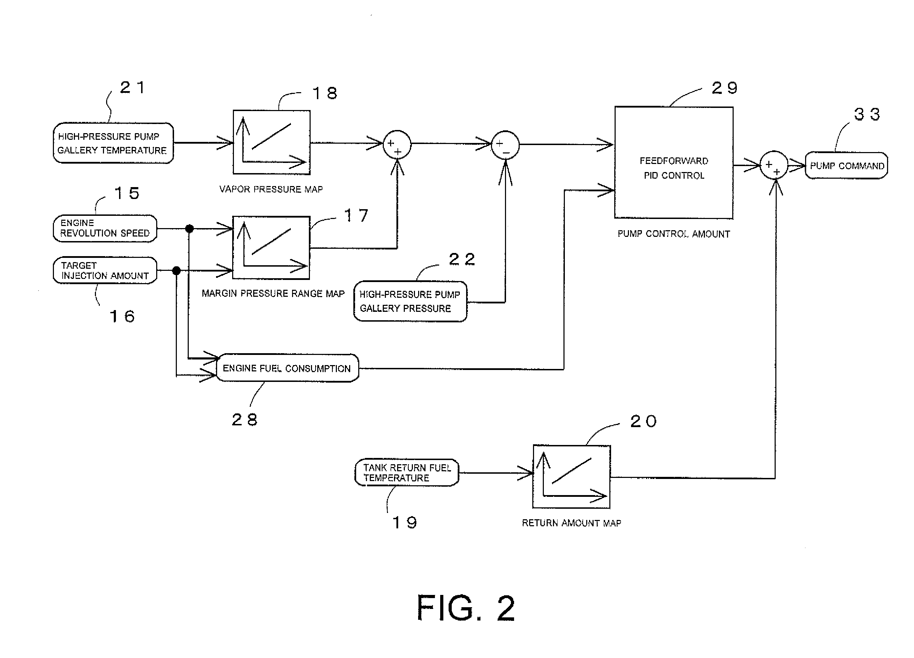

The best mode for carrying out the present invention will be described below with reference to the appended drawings. FIG. 1 is a structural diagram illustrating schematically a diesel engine for dimethyl ether of an embodiment of the present invention. FIG. 2 is a block diagram of a control system for controlling a feed pump.

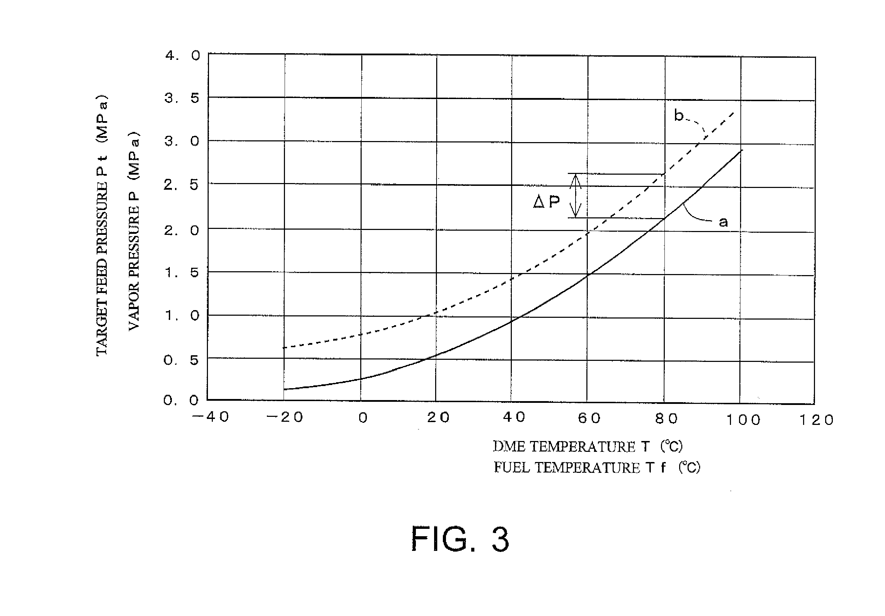

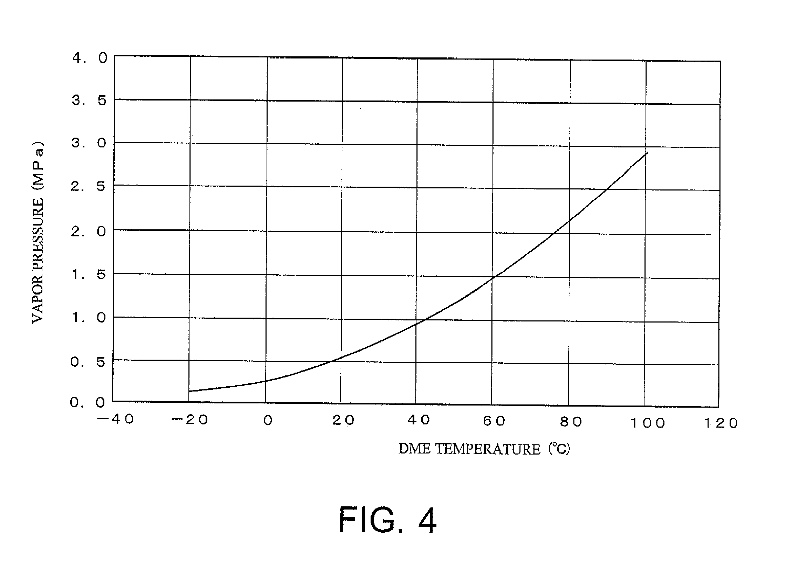

FIG. 3 is a vapor pressure diagram of DME and a margin pressure range. FIG. 4 is a vapor pressure diagram of DME.

In FIG. 1, the reference numeral 1 stands for a diesel engine using dimethyl ether (DME) as a fuel (diesel engine for dimethyl ether, also referred to hereinbelow simply as "engine"), this engine being designed for installation on a vehicle as a drive source for the vehicle. An engine body 1a constituting the diesel engine 1 is of a multicylinder, for example, four-cylinder common rail system in which DME accumulated in a common rail 2 is supplied to injectors 3 serving as injection nozzles. The engine body 1a is provided with a high-pressure pump 4 that pumps a fuel under a predetermined pressure, for example, by pressurizing to about 60 MPa to the common rail 2.

Further, the diesel engine 1 includes a fuel tank 6 that stores the DME 5 serving as a fuel in a liquid form, and the fuel tank 6 is provided with a feed pump 8 for supplying the DME 5 located within the tank into the high-pressure pump 4 on the engine side via a feed pipe 7. An electric motor 9 that drives the feed pump 8 is connected thereto. In the embodiment shown in FIG. 1, the feed pump 8 is disposed in the bottom portion inside the fuel tank 6.

One end (inlet side) of the feed pipe 7 passes air tightly through the bottom portion of the fuel tank 6 and is connected to the feed pump 8. An opening-closing valve 10 is provided at one end side of the feed pipe 7. Further, a fuel filling portion 11 that fills the DME and a safety valve 12 that releases the gasified DME to the atmosphere at a pressure equal to or higher than a predetermined pressure is provided in the fuel tank 6. The pressure inside the fuel tank 6 serves as a vapor pressure (see FIG. 4) corresponding to the tank temperature.

When the DME 5 is supplied to the high-pressure pump 4, it has to be supplied in a liquid form. Where the temperature of the fuel passage (gallery portion) 13 inside the high-pressure pump 4 is 80°C, if the DME is maintained at a pressure higher than a vapor pressure of 2.2 MPa thereof at this temperature, gasification of the DME can be prevented. Where the temperature of the fuel passage 13 inside the high-pressure pump 4 is 100°C, the pressure should be higher than the vapor pressure of about 3 MPa at this temperature. However, because a suction negative pressure is generated in the high-pressure pump 4 during discharge amount control, a margin pressure range taking this negative pressure into account is preferably set for the vapor pressure. Further, where the margin pressure range is constant at all times, regardless of the operation state of the engine 1, the load of the drive motor 9 of the supply pump 8 during the idling or under light load increases and there is a risk of causing the increase in power consumption and increase in feed pump drive noise.

Accordingly, in order to resolve these problems, the diesel engine 1 is provided with a control device (for example, an electronic control unit, referred to hereinbelow as ECU) 14 that calculates the vapor pressure from the fuel temperature in the fuel passage portion 13 inside the high-pressure pump 4, sets a margin pressure range corresponding to the vapor pressure based on the engine operation state, and controls the feed pump 8 so that the pressure of fuel in the fuel passage portion 13 of the high-pressure pump 4 is equal to a target pressure obtained by adding the margin pressure range to the vapor pressure. Here, parameters indicating the operation state of the engine include engine revolution speed (rpm), injection amount, accelerator opening degree, and injector switching leak amount. In the present embodiment, the margin pressure range ΔP is found based on an engine revolution speed 15 and a target injection amount 16, as shown in FIG. 2, and the margin pressure range is created as a margin pressure range map 17 in the form of a two-dimensional map. The target injection amount 16 is found from the engine revolution speed and accelerator opening degree.

The ECU 14 stores a vapor pressure map 18 created based on the vapor pressure diagram of DME, the margin pressure range map 17, and the below-described return amount map 20 created based on a tank return fuel temperature 19. FIG. 3 shows both the vapor pressure diagram of the DME and the margin pressure range map. When FIG. 3 is considered as a vapor pressure diagram of DME, a temperature T (°C) of DME is plotted against the abscissa and a vapor pressure P (MPa) is plotted against the ordinate, and the vapor pressure diagram is represented by (a). On the other hand, when FIG. 3 is considered as a map, a fuel temperature Tf (°C) is plotted against the abscissa, a target supply pressure Pt (MPa) is plotted against the ordinate, and the diagram of the target supply pressure is represented by (b).

The target supply pressure Pt for each fuel temperature Tf represents a target supply pressure that is higher than the vapor pressure P at the same DME temperature T by a predetermined value (margin pressure range) ΔP. A value of the margin pressure range ΔP is set, based on the engine operation state, such that the load of the feed pump drive motor 9 does not become too high. Further, FIG. 3 shows the case in which the margin pressure range ΔP is constant, but in the present embodiment, the margin pressure range varies according to the engine operation state.

A temperature sensor (fuel temperature sensor) 23 and a pressure sensor (fuel pressure sensor) 24 are provided in the fuel passage portion 13 in order to detect the fuel temperature (also referred to as gallery temperature) 21 and fuel pressure (also referred to as gallery pressure) 22 of the fuel passage portion (gallery portion) 13 inside the high-pressure pump 4, and the detection values of the sensors (detection signals) are inputted to the ECU 14. Further, a revolution speed sensor 25 is provided in the engine 1 for detecting a revolution speed thereof, an accelerator pedal 26 is provided with an accelerator sensor 27 that detects the accelerator opening degree (accelerator pedal push-down amount), and the detection values of the sensors are inputted to the ECU 14.

In the control process, the vapor pressure is found from the vapor pressure map 18 based on the high-pressure pump gallery temperature 21 as shown in FIG. 2, the margin pressure range ΔP found from the margin pressure range map 17 based on the engine revolution speed 15 and target injection amount 16 is added to the vapor pressure to obtain a target pressure, a pump control amount is calculated based on a differential pressure obtained by subtracting the present high-pressure pump gallery pressure 22 from the target pressure and also based on the engine consumption amount 28 calculated from the engine revolution speed 15 and target injection amount 16, and the feed pump 8 is controlled by feedforward PID control 29 based on the pump control amount. The engine consumption amount 28 as referred to herein is a DME consumption amount including a switching amount and an injector injection amount (including an acceleration correction) corresponding to the number of cylinders.

On the other hand, a relief valve 31 that returns the fuel from the fuel passage portion 13 to the fuel tank 6 via a return pipe 30 when the fuel pressure exceeds a predetermined value is provided in the fuel passage portion 13 inside the high-pressure pump 4, and a return fuel temperature sensor 32 that detects the temperature of the return fuel returned to the fuel tank 6 (also referred to as tank return fuel temperature) is provided in the return pipe 30. The control device (ECU) 14 is set so as to raise the revolution speed of the feed pump 8 and increase the return amount of the return fuel when the temperature of the return fuel exceeds a predetermined value (predetermined set value) in order to lower the fuel temperature inside the fuel tank 6 (suppress the increase in fuel temperature). In this case, it is preferred that a return amount map 20 be created in which the return amount of the return fuel corresponding to the tank return fuel temperature 19 is found as shown in FIG. 2, a correction of adding the return amount to the pump control amount be performed based on the return amount map 20, and a pump command 33 for controlling the feed pump 8 be issued. The pump command 33 as referred to herein is a motor rpm command in a pump of a fixed discharge type and a variable amount command in pumps of other types, for example, variable capacity pumps.

In the fuel passage portion 13 inside the high-pressure pump 4, a portion that can control the pressure of DME from the feed pump 8 is a segment from the inlet of the fuel passage portion 13 to a compression portion 34 (this segment is called an inlet side passage 13a), and a segment from the compression portion 34 to the high-pressure fuel outlet including an electromagnetic valve (this segment is called an outlet side passage) is under a high pressure. Therefore, the temperature sensor 23 and pressure sensor 24 are disposed in the inlet side passage 13a of the fuel passage 13. In the example shown in FIG. 1, the inlet side passage 13a is disposed so as to pass horizontally through the high-pressure pump body, and the relief valve 31 is installed at the rear end portion (right end) of the inlet side passage 13a. As a result, the heat of the gallery portion (fuel passage) 13 can be taken off from the rear end of the inlet side passage 13a, and the temperature of the gallery portion 13 of the high-pressure pump 4 can be lowered. An opening-closing valve 35 is provided downstream (on the fuel tank side) of the return pipe 30.

A method for controlling the feed pump 8 that supplies the fuel from the fuel tank 6 to the high-pressure pump 4 in the engine 1 of the above-described configuration will be described below. The gallery temperature 21 of the high-pressure pump 4 is detected by the temperature sensor 23, the gallery pressure 22 of the high-pressure tank 4 is detected by the pressure sensor 24, and the ECU 14 calculates the vapor pressure of the DME corresponding to the gallery temperature 21 from the gallery temperature 21 based on the vapor pressure map 18. On the other hand, in order to set the margin pressure range ΔP corresponding to the engine operation state, the engine rpm is detected by the revolution speed sensor 25, the accelerator opening degree is detected by the accelerator sensor 27, and the ECU 14 calculates the target injection amount from these detection values and calculates the margin pressure range ΔP corresponding to the engine operation state from these engine revolution speed 15 and target injection amount 16 according to the margin pressure range map 17.

Then, the margin pressure range is added to the vapor pressure to obtain the target pressure, the pump control amount is calculated based on the differential pressure obtained by subtracting the present high-pressure gallery pressure 22 from the target pressure and the engine consumption amount 28 calculated from the engine revolution speed 15 and target injection amount 16, and the feed pump 8 is controlled by the feedforward PID control 29 based on the pump control amount.

Therefore, with this control method, during the idling or under light load when the engine revolution speed is low, the margin pressure range can be made smaller than that in the case the margin pressure range is fixed (constant). As a result, power consumption of the drive motor 9 of the feed pump 8 and the drive noise of the drive pump 8 during the idling or under light load can be reduced and battery endurance and merchantability of the vehicle carrying the engine can be increased.

On the other hand, in the above-described control method, the temperature of the return fuel that is returned from the high-temperature pump 4 to the fuel tank 6 via the relief valve 31 and return pipe 30 is detected by the return fuel temperature sensor 32, and the ECU 14 calculates the return amount (target return amount) corresponding to the tank return fuel temperature 19 from the tank return fuel temperature 19 according to the return amount map 20, performs correction by adding the target return amount to the pump control amount, and controls the feed pump 8 by using the corrected pump control amount as the pump command 33. Therefore, the circulating amount of fuel that circulates from the fuel tank 6 through the feed pipe 7, fuel passage portion 13 inside the high-pressure pump 4, relief valve 31, and return pipe 30 is increased, the decrease in fuel temperature is enhanced by heat exchange caused by heat radiation, for example, from the feed pipe 7 and return pipe 30, and the temperature of the fuel passage portion 13 inside the high-pressure pump 4 and the fuel temperature inside the fuel tank 6 can be lowered. As a result, a fuel cooler becomes unnecessary and cost can be reduced.

An embodiment of the present invention is described hereinabove with reference to the drawings, but the present invention is not limited to this embodiment, and various design modifications can be made without departing from the spirit and scope of the present invention. For example, the control device may be set so as to detect the tank return fuel temperature and raise the revolution speed of the feed pump and increase the feed amount and return amount of the fuel when the temperature of the return fuel is higher than a predetermined value, but to maintain the present revolution speed of the feed pump, without increasing it, when the temperature of the return fuel is below the predetermined value.

## Claims

1. A diesel engine using dimethyl ether as a fuel, comprising: a feed pump provided in a fuel tank and supplying the fuel in the fuel tank to a high-pressure pump on the engine side through a feed pipe; and a control device that calculates a vapor pressure from a fuel temperature in a fuel passage portion inside the high-pressure pump, sets a margin pressure range of the vapor pressure based on an engine operation state, and controls the feed pump so that a pressure of the fuel in the fuel passage portion inside the high pressure pump becomes a target pressure obtained by adding the margin pressure range to the vapor pressure.

2. The diesel engine for dimethyl ether according to claim 1, wherein a relief valve, which returns the fuel from the fuel passage portion to the fuel tank via a return pipe when a fuel pressure exceeds a predetermined value, is provided in the fuel passage portion inside the high-pressure pump, a return fuel temperature sensor which detects a temperature of the return fuel that is returned to the fuel tank is provided in the return pipe, and the control device is set so that a revolution speed of the feed pump is raised to increase a return amount of the return fuel when the temperature of the return fuel exceeds a predetermined value.
